(19) **Europäisches Patentamt**
**European Patent Office**
**Office européen des brevets**

(11) **EP 1 813 070 B1**

(12) **EUROPEAN PATENT SPECIFICATION**

(45) Date of publication and mention
of the grant of the patent:
**07.01.2009 Bulletin 2009/02**

(51) Int Cl.:
***H04L 27/00*** (2006.01) ***H04L 27/227*** (2006.01)
***H04L 7/02*** (2006.01)

(21) Application number: **04811144.7**

(86) International application number:
**PCT/US2004/038328**

(22) Date of filing: **16.11.2004**

(87) International publication number:
**WO 2006/049628 (11.05.2006 Gazette 2006/19)**

(54) **METHOD AND APPARATUS FOR CARRIER RECOVERY USING PHASE INTERPOLATION WITH ASSIST**

VERFAHREN UND VORRICHTUNG ZUR TRÄGERWIEDERGEWINNUNG DURCH VERWENDUNG VON PHASENINTERPOLATION MIT UNTERSTÜTZUNG

PROCEDE ET APPAREIL DE RECUPERATION DE PORTEUSE PAR INTERPOLATION DE PHASE AVEC SUPPORT

(84) Designated Contracting States:
**DE FR GB**

(43) Date of publication of application:
**01.08.2007 Bulletin 2007/31**

(73) Proprietor: **Thomson Licensing**
**92100 Boulogne-Billancourt (FR)**

(72) Inventor: **KOSLOV, Joshua, Lawrence**
**Hopewell, New Jersey 08525 (US)**

(74) Representative: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) References cited:
**EP-A- 1 162 803** **EP-A- 1 328 100**
**EP-A- 1 361 687** **EP-A- 1 513 309**
**WO-A-02/058250** **US-A1- 2002 067 778**

• **DE GAUDENZI R ET AL: "All-digital carrier phase and clock timing recovery for 8PSK" COUNTDOWN TO THE NEW MILENNIUM. PHOENIX, DEC. 2 - 5, 1991, PROCEEDINGS OF THE GLOBAL TELECOMMUNICATIONS CONFERENCE. (GLOBECOM), NEW YORK, IEEE, US, vol. VOL. 3, 2 December 1991 (1991-12-02), pages 375-379, XP010042828 ISBN: 0-87942-697-7**

• **IRVINE, GARRICK T. AND MCLANE, PETER J.: "SYMBOL-AIDED PLUS DECISION-DIRECTED RECEPTION FOR PSK/TCM MODULATION ON SHADOWED MOBILE SATELLITE FADING CHANNELS" IEEE JOURNAL ON SELECTED AREAS IN COMMUNICATIONS, [Online] vol. 10, no. 8, October 1992 (1992-10), XP002338385 Retrieved from the Internet: URL:http:// ieeexplore.ieee.org/iel1/49/428 3/00166756.pdf? arnumber=166756> [retrieved on 2005-07-27]**

• **VITERBI A J ET AL: "NONLINEAR ESTIMATION OF PSK-MODULATED CARRIER PHASE WITH APPLICATION TO BURST DIGITAL TRANSMISSION" IEEE TRANSACTIONS ON INFORMATION THEORY, IEEE INC. NEW YORK, US, vol. IT-29, no. 4, 1 July 1983 (1983-07-01), pages 543-551, XP000565103 ISSN: 0018-9448 cited in the application**

• **ZHUANG A ET AL: "Combined pilot aided and decision directed channel estimation for the RAKE receiver" VEHICULAR TECHNOLOGY CONFERENCE, 2000. IEEE VTS FALL VTC 2000. 52ND SEPT. 24-28, 2000, PISCATAWAY, NJ, USA, IEEE, vol. 2, 24 September 2000 (2000-09-24), pages 710-713, XP010525470 ISBN: 0-7803-6507-0**

**Description**

BACKGROUND OF THE INVENTION

The present invention generally relates to communications systems and, more particularly, to carrier recovery.

A carrier recovery loop, or carrier tracking loop, is a typical component of a communications system. The carrier recovery loop is a form of phase locked loop (PLL) and, in general, takes the form of a "Costas Loop." The latter typically uses a decision- directed phase error estimator to drive the PLL. In a decision-directed phase error estimator, the loop is driven by phase errors between received signal points and respective sliced symbols (nearest symbols) taken from a symbol constellation. In other words, for each received signal point a hard decision is made as to which is the closest (and presumably correct) symbol (also referred to as the sliced symbol) of the symbol constellation. From this hard decision, the phase error between the received signal point and the associated sliced symbol is then used to drive the PLL. When the carrier frequency offset, i.e., the frequency difference between the carrier of the received signal and the recovered carrier, is outside the "lock range" of the loop, the so-called "pull-in" process occurs, in which, under proper operating conditions, the loop operates to reduce the carrier frequency offset until the carrier frequency offset falls inside the lock range of the loop and phase lock follows.

However, as the signal-to-noise ratio (SNR) drops the above-mentioned phase error estimate approach of the Costas loop becomes increasingly unreliable because the hard decision process begins to make more and more wrong decisions as to the received symbols. As such, other methods of estimating the phase are preferable. For example, in a system with known pilot symbols, phase may be reliably determined at the pilot times and linearly interpolatetTln between the pilot times. For example, in "Symbol-aided plus decision-directed reception for PSK/TCM modulation on shadowed mobile satellite fading channels" from Irvine et al, IEEE journal on selected areas in communications, vol. 10, n° 8, Oct. 1992, phase estimates are determined using a symbol-aided plus decision-directed (SADD) tracker as a function of a confidence indicator, beta. In particular, a SADD tracker determines phase estimates using known symbols (symbol-aided) until a value for the confidence indicator, beta, exceeds a value. Conversely, in a system lacking pilot symbols, a phase estimate may also be determined periodically by using a data-driven average, such as represented by the Viterbi and Viterbi algorithm (AJ. Viterbi and A.M. Viterbi, "Nonlinear estimation of PSK-modulated carrier phase with application to burst digital transmission," IEEE Transactions on Information Theory, vol. IT-29, pp. 543-551, July, 1983). Again, in this data-driven process linear interpolation may be used to estimate the phase at other times.

Unfortunately, in "interpolating carrier recovery" the linear interpolation process itself may be somewhat problematic if there are large frequency offsets, or phase noise, or if the determined phase estimates come infrequently (whether from pilot symbols or the result of a data-driven average).

SUMMARY OF THE NVENTION

In accordance with the principles of the invention, a method and a receiver according to claims 1 and 5 use a decision-directed phase estimator in conjunction with an interpolator to provide a phase estimate for use in carrier recovery.

In an embodiment of the invention, a receiver comprises a pilot phase estimator, a Costas loop and an interpolation controller. The pilot phase estimator provides determined phase estimates at the pilot times and the interpolation controller provides interpolated phase estimates at other times as a function of a linear interpolation based on a respective determined phase estimate and at least one decision-directed phase error estimate from the Costas loop.

In another embodiment of the invention, a receiver comprises a data-driven average phase estimator, a Costas loop and an interpolation controller. The data-driven average phase estimator provides determined phase estimates at particular times and the interpolation controller provides interpolated phase estimates at other times as a function of a linear interpolation based on a respective determined phase estimate and at least one decision-directed phase error estimate from the Costas loop.

In another embodiment of the invention, a receiver comprises a pilot-phase estimator, a data-driven average phase estimator, a mode selector, a Costas loop and an interpolation controller. The mode selector selects either the pilot-phase estimator or the data-driven average phase estimator as the source of determined phase estimates at particular times. At other times, the interpolation controller provides interpolated phase estimates as a function of a linear interpolation based on a respective determined phase estimate and at least one decision-directed phase error estimate from the Costas loop.

BRIEF DESCRIPTION OF THE DRAWINGS

FIG. 1 shows a portion of an illustrative communications system embodying the principles of the invention;
FIG. 2 shows in illustrative format of a received signal;

FIG. 3 shows an illustrative embodiment of a receiver in accordance with the principles of the invention;

FIG. 4 shows an illustrative embodiment of a demodulator in accordance with the principles of the invention;

FIG. 5 shows an illustrative embodiment of a carrier recovery with assist element in accordance with the principles of the invention;

FIG. 6 illustrates an EPOCH for use in the carrier recovery with assist element of FIG. 5;

FIGs. 7 and 8 illustrative phase excursion examples;

FIG. 9 shows an illustrative embodiment of a decision-directed carrier recovery element used to assist in carrier recovery in accordance with the principles of the invention;

FIG. 10 illustrates a phase excursion calculator in accordance with the principles of the invention;

FIG. 11 illustrates another embodiment in accordance with the principles of the invention;

FIG. 12 illustrates another embodiment in accordance with the principles of the invention;

FIG. 13 shows an illustrative flow chart in accordance with the principles of the invention; and

FIG. 14 illustrates another embodiment in accordance with the principles of the invention.

## DETAILED DESCRIPTION

Other than the inventive concept, the elements shown in the figures are well known and will not be described in detail. Also, familiarity with satellite-based systems is assumed and is not described in detail herein. For example, other than the inventive concept, satellite transponders, downlink signals, symbol constellations, carrier recovery, interpolation, phase-locked loops (PLLs), a radio-frequency (rf) front-end, or receiver section, such as a low noise block downconverter, formatting and encoding methods (such as Moving Picture Expert Group (MPEG)-2 Systems Standard (ISO/IEC 13818-1)) for generating transport bit streams and decoding methods such as log-likelihood ratios, soft-input-soft-output (SISO) decoders, Viterbi decoders are well-known and not described herein. In addition, the inventive concept may be implemented using conventional programming techniques, which, as such, will not be described herein. Finally, like-numbers on the figures represent similar elements and some of the figures simplify the processing representation. For example, those skilled in the art appreciate that carrier recovery involves processing in the real and the complex domains.

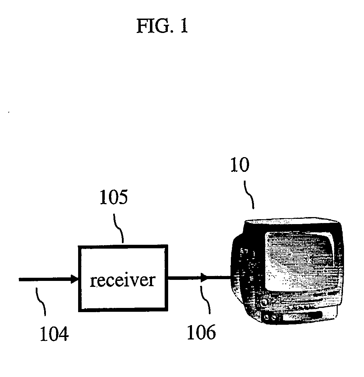

An illustrative portion of a communications system in accordance with the principles of the invention is shown in FIG. 1. As can be observed from FIG. 1, a signal 104 is received by a receiver 105. Signal 104 conveys information representative of control signaling, content (e.g., video), etc. In the context of this example, it is assumed that signal 104 represents a downlink satellite signal after reception by an antenna (not shown). Receiver 105 processes signal 104 in accordance with the principles of the invention (described below) and provides a signal 106 for conveying particular content to a multi-media endpoint as represented by television (TV) 10 for display thereon.

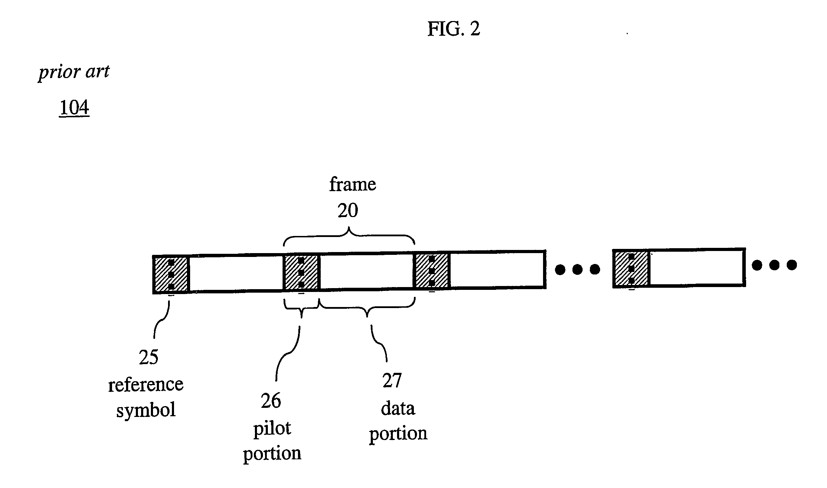

A prior art signal format for signal 104 is shown in FIG. 2. For the purposes of this example, signal 104 comprises a sequence of frames 20, each frame 20 comprising at least a pilot portion 26 and a data portion 27. Pilot portion 26 comprises one, or more, pilot symbols, which are predefined symbols known *a priori* to receiver 105. If there is more than one pilot symbol in pilot portion 26, it is assumed that at least one of the pilot symbols is predesignated as a reference symbol 25 (described below). It should be noted that the picture of FIG. 2 is not to scale and is merely representative of a signal comprising one or more pilot symbols interspersed with data symbols, which convey other information such as the above-mentioned control signaling and content, as well as, e.g., header and error correction/detection information, etc.

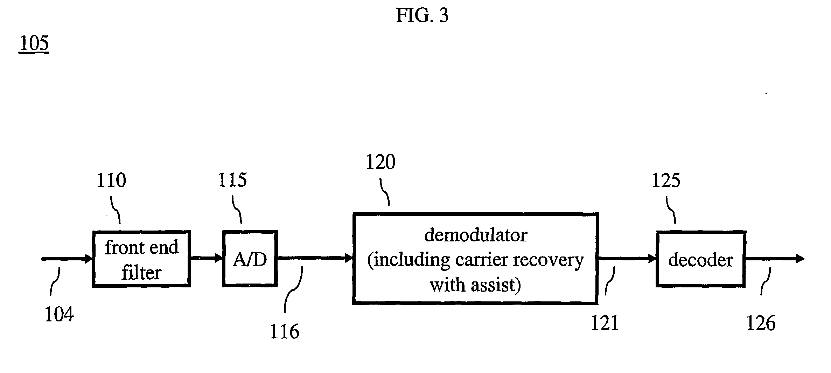

An illustrative portion of receiver 105 in accordance with the principles of the invention is shown in FIG. 3. Receiver 105 includes front end filter 110, analog-to-digital (A/D) converter 115, demodulator 120 and decoder 125. Demodulator 120, in accordance with the principles of the invention, includes at least one carrier recovery with assist element (a circuit and/or process) (described below). Front end filter 110 down-converts (e.g., from the satellite transmission bands) and filters received signal 104 to provide a near baseband signal to A/D converter 115, which samples the down converted signal to convert the signal to the digital domain and provide signal 116, which is a sequence of samples, to demodulator 120. The latter performs demodulation of signal 116 (including carrier recovery) and provides a demodulated signal 121 to decoder 125, which decodes the demodulated signal point stream 121 to provide signal 126, which is a bit stream of N bits per symbol interval T. Signal 126 represents the recovered data conveyed on signal 104 of FIG. 1. Data from output signal 126 is eventually provided to TV 10 via signal 106. (In this regard, receiver 105 may additionally process the data before application to TV 10 and/or directly provide the data to TV 10.)

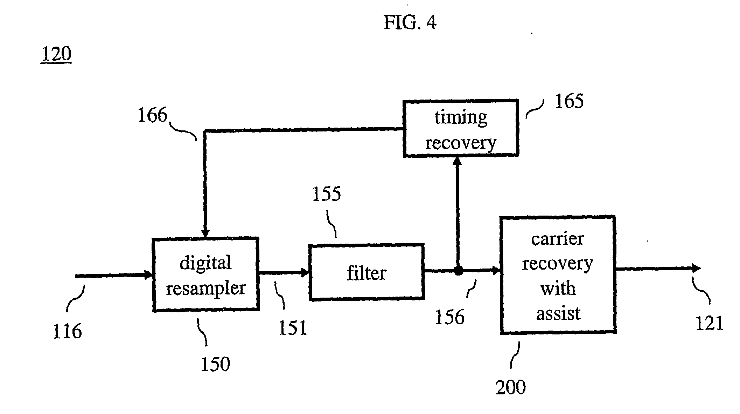

Turning now to FIG. 4, an illustrative block diagram of demodulator 120 in accordance with the principles of the invention is shown. Demodulator 120 includes digital resampler 150, filter 155, carrier recovery with assist element 200, and timing recovery element 165. Signal 116 is applied to digital resampler 150, which resamples signal 116 using timing signal 166, which is provided by timing recovery element 165, to provide resampled signal 151. Resampled signal 151 is applied to filter 155. The latter is a bandpass filter for filtering resampled signal 151 about the carrier frequency to provide a filtered signal 156 to both carrier recovery with assist element 200 and the above-mentioned timing recovery element 165, which generates therefrom timing signal 166. Carrier recovery with assist element 200 derotates, i.e., removes the carrier from, filtered signal 156 to provide a demodulated signal point stream, as represented by signal 121, to decoder 125 of FIG. 3.

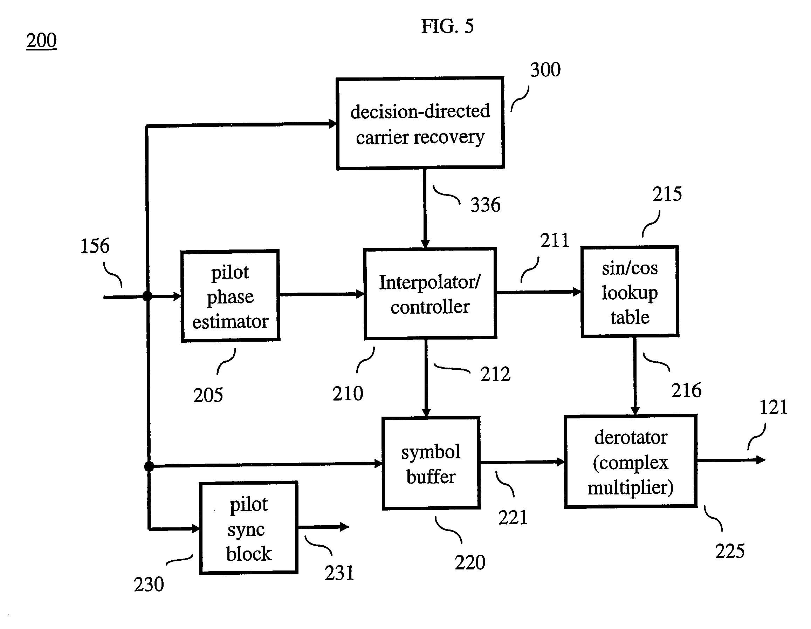

As noted above, and in accordance with the principles of the invention, receiver 105 includes a carrier recovery with assist element 200. An illustrative embodiment of such an element is shown in FIG. 5. The elements illustrated in FIG. 5 represent one form of a carrier recovery with assist element that can be implemented in either hardware and/or software. Carrier recovery with assist element 200 comprises pilot phase estimator 205, a pilot synchronization (sync) block 230, interpolator/controller 210, sine/cosine (sin/cos) lookup table 215, symbol buffer 220, derotator 225 (which is a complex multiplier) and decision-directed carrier recovery element 300. Filtered signal 156 is applied to pilot phase estimator 205, pilot sync block 230, symbol buffer 220 and decision-directed carrier recovery element 300. As described further below, carrier recovery with assist includes both "interpolating carrier recovery" and "decision-directed carrier recovery."

Turning first to symbol buffer 220, this buffer collect symbols over a time period (described below), thus providing a time delay to enable calculation of a phase estimate by interpolator/controller 210 before application of a received symbol to derotator 225. In particular, Interpolator/controller 210 controls symbol buffer 220, via signal 212, to both synchronize the writing of symbols represented by filtered signal 156 to buffer 220, and the reading of stored symbols from buffer 220 for application to derotator 225 (via signal 221) along with application of the appropriate phase estimate via sin/cos lookup table 215 (via signal 216). It should be noted that other mechanisms can be used to provide the appropriate delay, e.g., a delay line, a first-in-first-out (FIFO) buffer, etc.

Turning next to pilot sync block 230, this block provides a timing signal 231 for use by other elements of FIG. 5 as required. Timing signal 231 provides a time reference with respect to the detection of pilot symbols in filtered signal 156.

Next up is pilot phase estimator 205, this element provides determined phase estimates to interpolator/controller 210. In particular, upon detection of the one, or more, pilot symbols in filtered signal 156, pilot phase estimator 205 provides a determined phase estimate to interpolator/controller 210. As noted above, each pilot portion 26 of FIG. 2, or pilot interval, comprises one or more known symbols transmitted at known times. Pilot phase estimator 205 averages the symbols in the pilot intervals to determine an average phase estimate during the pilot interval. For example, if the pilot portion comprises a number of different pilot symbols, an average phase may be determined as illustrated by the equation below:

$$\text{Avg. phase} = angle\left(\sum_i R_i \bullet P_i^*\right), \qquad (1)$$

where $R_i$ are the received pilot symbols, $P_i^*$ is the complex conjugate of the known pilot symbols, and the index, $i$, is over the all the pilot symbols.

This determined phase estimate may be referenced, e.g., to the center symbol (reference symbol) of the pilot interval (as represented by reference symbol 25 of FIG. 2): In other words, the determined phase estimate over the pilot interval is assumed to be the phase at the middle of the pilot interval. Thus, pilot phase estimator 205 provides determined phase estimates at particular times, e.g., every pilot interval, to interpolator/controller 210.

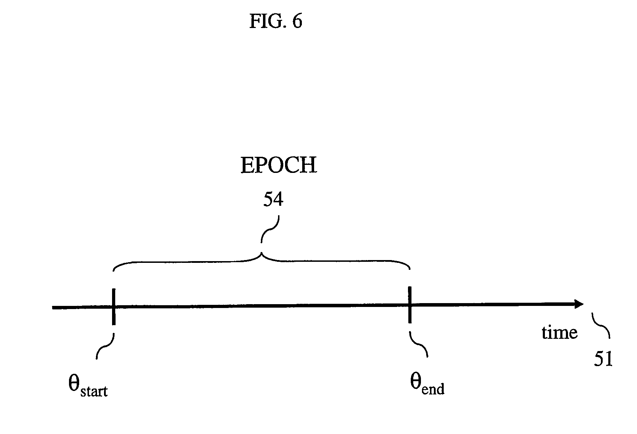

Illustratively, the time between pilot intervals is referred to herein as an "EPOCH." This is illustrated in FIG. 6 for an illustrative EPOCH 54 spanning a portion of time along time axis 51. The beginning of an EPOCH is marked by the generation of a determined phase estimate from pilot phase estimator 205, as represented by $\theta_{start}$ in FIG. 6. Likewise, the end of an EPOCH is marked by the generation of a subsequent determined phase estimate from pilot phase estimator 205, as represented by $\theta_{end}$ in FIG. 6. (It should be noted that the end of one EPOCH is the start of another EPOCH, i.e., $\theta_{end}$ of one EPOCH is the $\theta_{start}$ for the following EPOCH.) During an EPOCH, N symbols are received and buffered in symbol buffer 220, i.e., the period of time covered by the EPOCH is equal to $NT$, where T is the symbol interval.

Ignoring for the moment decision-directed carrier recovery element 300, interpolator/controller 210 provides a signal 211 to sin/cos lookup table 215. Signal 211 represents a value for the estimated amount of phase needed to derotate a corresponding symbol, i.e., the amount of phase derotation to remove any phase offset. Sin/cos lookup table 215 provides the corresponding sine and cosine values of this phase estimate to complex multiplier 225 for de-rotation of signal 221 to provide down-converted received signal 121.

The estimated phase value represented by signal 211 is referred to herein as $\phi_{derot}$. At the start of an EPOCH, the amount of phase needed to derotate a symbol is $\phi_{start}$, which is equal to:

$$\phi_{start} = - \theta_{start}, \qquad\qquad (2)$$

where all angles are expressed in radians. As defined herein, $\phi_{start}$ is also referred to herein as the "inverse" of $\theta_{start}$. At the end of an EPOCH, the amount of phase needed to derotate a symbol is equal to:

$$\phi_{start} + diff_{lin}, \qquad\qquad (3)$$

where $diff_{lin}$ is defined as:

$$diff_{lin} = \begin{cases} \phi_{end} - \phi_{start}, when - \pi < \phi_{end} - \phi_{start} < \pi; \\ \phi_{end} - \phi_{start} + 2\pi, when \; \phi_{end} - \phi_{start} < -\pi; \\ \phi_{end} - \phi_{start} - 2\pi, when \; \phi_{end} - \phi_{start} > \pi. \end{cases} \qquad (4)$$

and where $\phi_{end}$ is the inverse of $\theta_{end}$, i.e.,

$$\phi_{end} = - \theta_{end}, \qquad\qquad (5)$$

In between the start and end of an EPOCH, the phase required for derotating a received symbol is not known. In order to provide a phase estimate, interpolator/controller 210 performs linear interpolation to generate a value for $\phi_{derot}$. In particular, the above noted value for $diff_{lin}$ is assumed to be linearly distributed over the $N$ symbols of the EPOCH, i.e., for the $k^{th}$ symbol of the EPOCH, the phase estimate, $\phi_{derot,k}$ is:

$$\phi_{derot,k} = \phi_{start} + \frac{k}{N} diff_{lin}. \qquad\qquad (6)$$

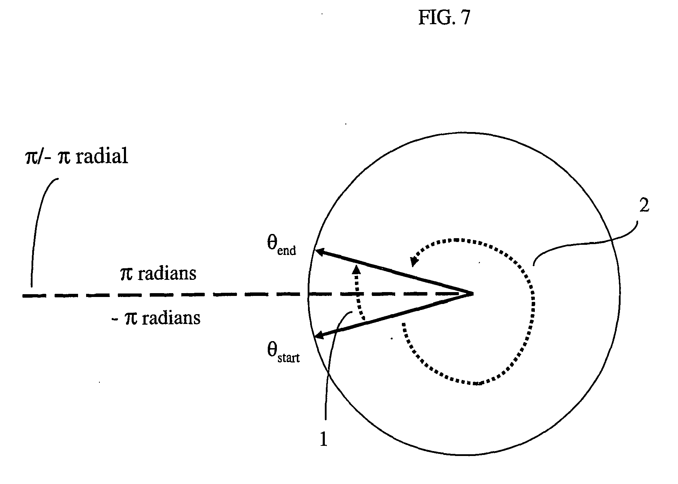

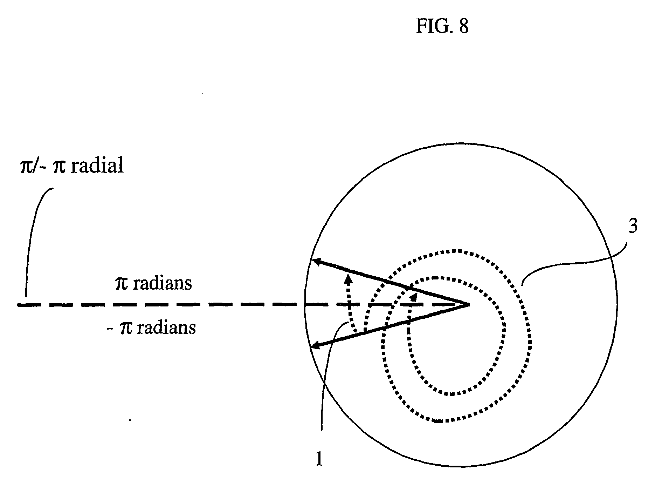

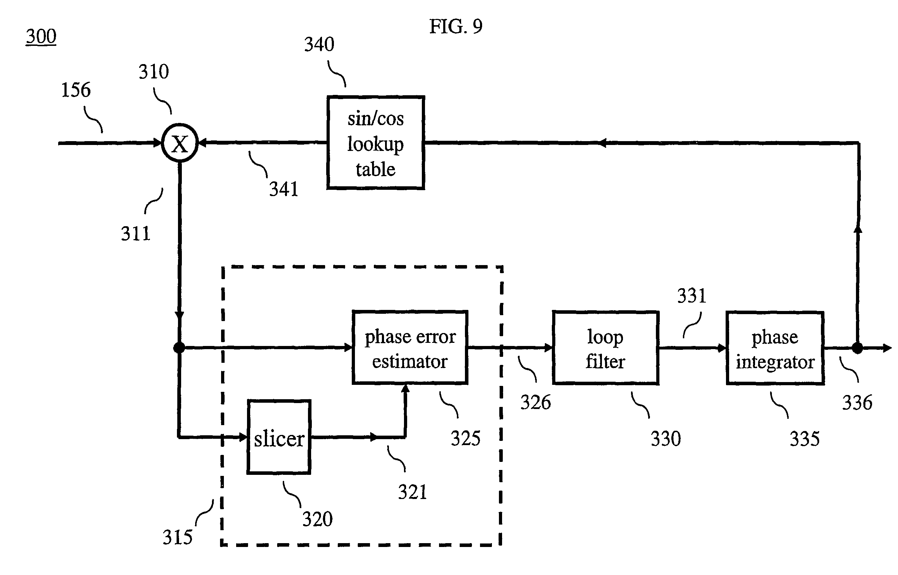

where k represents the symbol index in the EPOCH and $N$ is the total number of symbols within the EPOCH.
Unfortunately, without knowing how many radians the incoming carrier traversed between the pilot times, the above-described linear interpretation estimate may yield the wrong value for $\phi_{derot,k}$. This is further illustrated in FIGs. 7 and 8. FIG. 7 shows respective values for $\phi_{start}$ and $\phi_{end}$ for an illustrative EPOCH. However, as demonstrated by arrows 1 and 2, the starting and ending determined phase estimates do not provide information as to whether the incoming carrier traversed the path represented by arrow 1 or the path represented by arrow 2. Likewise, a similar situation is shown in FIG. 8, which illustrates by the path associated with arrow 3 that the number of radians traversed by the incoming carrier can even be greater than $2\pi$. Therefore, and in accordance with the principles of the invention, decision-directed carrier recovery is used to resolve this ambiguity. This is illustrated in FIG. 5 by the application of filtered signal 156 to decision-directed carrier recovery circuit 300.
Turning briefly to FIG. 9, an illustrative block diagram for decision-directed carrier recovery circuit 300 is shown. Decision-directed carrier recovery circuit 300 comprises complex multiplier 310, sine/cosine (sin/cos) lookup table 340, phase detector 315, loop filter 330 and phase integrator 335. It is assumed that the processing illustrated by FIG. 9 is in the digital domain (although this is not required), i.e., the carrier recovery circuit 300 includes a digital phase-locked loop (DPLL) driven by hard decisions. Signal 156 is a complex sample stream comprising in-phase (I) and quadrature (Q) components. It should be noted that complex signal paths are not specifically shown in FIG. 9. Complex multiplier 310 receives the complex sample stream of signal 156 and performs de-rotation of the complex sample stream by recovered carrier signal 341. In particular, the in-phase and quadrature components of signal 156 are derotated by a phase of recovered carrier signal 341, which represents particular sine and cosine values provided by sin/cos table 340 (described below). The output signal from complex multiplier 310 is a down-converted received signal 311, e.g., at baseband, and represents a de-rotated complex sample stream of received signal points. The down-converted received signal 311 is applied to phase detector 315, which computes any phase offset still present in the down-converted signal 311 and provides a phase error estimate signal 326 indicative thereof.

As can be observed from FIG. 9, phase detector 315 includes two elements: phase error estimator 325 and slicer 320. As known in the art, the latter makes a hard decision as to the possible symbol (target symbol) represented by the in-phase and quadrature components of each received signal point of down-converted signal 311. In particular, for each received signal point of down-converted signal 311, slicer 320 selects the closest symbol (target symbol) from a predefined constellation of symbols. As such, the phase error estimate signal 326 provided by phase error estimator 325 represents the phase difference between each received signal point and the corresponding target symbol. In particular, phase error estimate signal 326 represents a sequence of phase error estimates, $\phi_{error\_estimate}$, where each particular $\phi_{error\_estimate}$ is determined by calculating the imaginary part of the received signal point times the conjugate of the associated sliced symbol, i.e.,

$$\phi_{error\_estimate} = imag(z \bullet z^*_{sliced}) = |z| \bullet |z_{sliced}| \sin(\angle z - \angle z_{sliced}) \cong |z|^2 \bullet \phi_{error} . \qquad (7)$$

In the above equation, Z represents the complex vector of the received signal point, Z$_{sliced}$ represents the complex vector of the associated sliced signal point and $z^*_{sliced}$ represents the conjugate of the complex vector of the associated sliced signal point.

The phase error estimate signal 326 is applied to loop filter 330, which further filters the phase error estimate signal 326 to provide a filtered signal 331. Typically loop filter 330 is a second-order loop comprising proportional and integral paths. Filtered signal 331 is applied to phase integrator 335, which further integrates filtered signal 331 and provides an output phase angle signal 336 to sin/cos lookup table 340. The latter provides the associated sine and cosine values to complex multiplier 310 for de-rotation of signal 156 to provide down-converted received signal 311. Although not shown for simplicity, a frequency offset, $F_{OFFSET}$, may be fed to loop filter 330, or phase integrator 335, to increase acquisition speed. Also, it should be noted that carrier recovery circuit 300 may operate at multiples of (e.g., twice) the symbol rate of signal 156. As such, phase integrator 335 continues to integrate at all sample times. In accordance with the principles of the invention, output phase angle signal 336 is also applied to interpolator/controller 210 of FIG. 5 to assist in generating a phase estimate. (It should be noted that the output phase angle 336 is already in the form of a derotating phase value and, as such, is the inverse of the signal phase to be corrected.)

Returning now to FIG. 5, the phase of the decision-directed carrier recovery is monitored by interpolator/ controller 210 via phase angle signal 336. In particular, interpolator/controller 210 monitors phase angle signal 336 between the start and end of each EPOCH to determine the total phase excursion, $diff_{cr}$, from beginning to end of an EPOCH, which may exceed π or be less than -π. This total phase excursion, $diff_{cr}$, is - in accordance with the principles of the invention - used by interpolator/controller 210 as additional information for use in estimating a value for $\phi_{derot}$ for a respective symbol. Although the decision-directed carrier recovery may slightly slip, or be noisy - which is the reason for using an interpolation scheme in the first place - decision-directed carrier recovery should be robust enough for use as an aid to interpolated carrier recovery as long as the decision-directed carrier recovery does not slip by more than π or less than -π during an EPOCH.

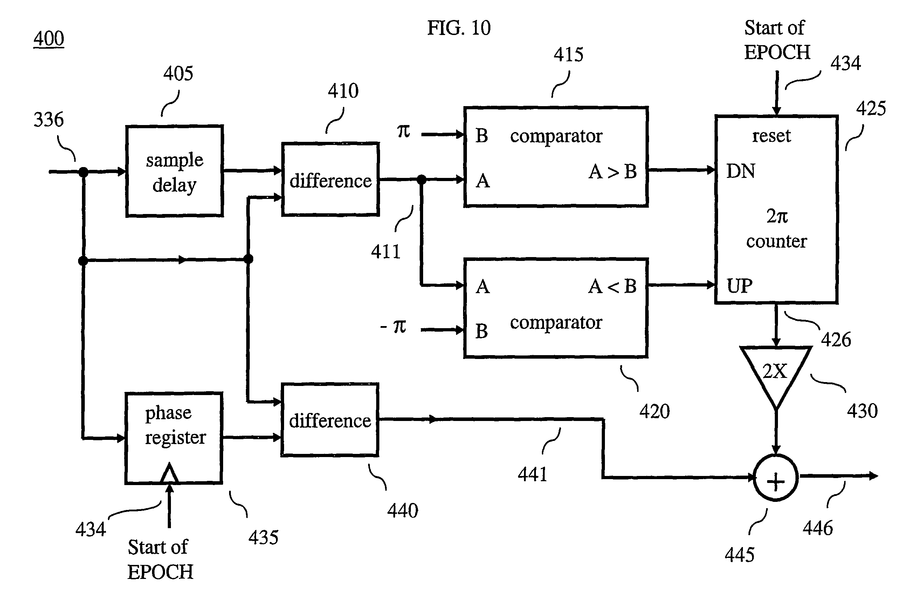

Referring now to FIG. 10, an illustrative phase excursion calculator 400 for use in interpolator/controller 210 for monitoring the total phase excursion $diff_{cr}$ is shown. The elements illustrated in FIG. 10 represent one form of phase excursion calculator that can be implemented in either hardware and/or software. Phase excursion calculator 400 comprises sample delay 405, phase register 435, difference elements 410 and 440, comparators 415 and 420, a counter 425, a multiplier 430 and an adder 445. At the start of an EPOCH (conveyed by signal 434) the value represented by phase angle signal 336 is stored in phase register 435 and counter 425 is reset to a value of zero. Difference element 440 provides a phase difference value 441 between the starting phase value stored in phase register 435 and subsequent phase values during the EPOCH. This phase difference value 441 is also referred to herein as the uncorrected phase difference. The remaining elements of phase excursion calculator 400 track how many times, and in what direction, the value of phase angle signal 336 crosses the π/-π radial (this radial is represented in FIGs. 7 and 8, described earlier). In particular, during an EPOCH, difference element 410 provides a phase difference signal 411, representing sample-to-sample phase difference values by subtracting a previous phase value provided by sample delay element 405 from a current phase value provided by phase angle signal 336. This phase difference value signal is applied to the "A" input leads of comparators 415 and 420. Comparator 415 compares the value of phase difference signal 411 to π (applied to the "B" input lead of comparator 415); while comparator 420 compares the value of phase difference signal 411 to -π (applied to the "B" input lead of comparator 420). If the phase difference value is greater π, then comparator 415 provides a signal from the "A>B" lead of comparator 415 to counter 425. However, if the phase difference value is less than -π, then comparator 420 provides a signal from the "A<B" lead of comparator 420 to counter 425. Counter 425 is, in effect,

6

a $2\pi$ counter, i.e., counter 425 counts the number of times and in what direction the $\pi/-\pi$ radial is crossed. If the phase difference value is greater than $\pi$, then counter 425 is decremented (DN input of counter 425), while if the phase difference value is less than $-\pi$, counter 425 is incremented (UP input of counter 425). The output signal 426 from counter 425 is applied to multiplier 430 which multiplies the value represented therein by $2\pi$ for addition to the uncorrected phase difference (signal 441) via adder 445 to provide the total phase excursion $diff_{cr}$ (signal 446) for use by interpolator/controller 210. In other words, every time the $\pi/-\pi$ radial is crossed in the clockwise direction, the total phase excursion during the EPOCH needs to be decremented by $2\pi$ relative to the uncorrected phase difference (signal 441) during the EPOCH. Similarly, every time the $\pi/-\pi$ radial is crossed in the counterclockwise direction, the total phase excursion during the EPOCH needs to be incremented by $2\pi$ relative to the uncorrected phase difference (signal 441).

As noted above, the beginning and end phases, $\phi_{start}$ and $\phi_{end}$, of the linear interpolation are assumed to be robust from pilot phase estimator 205, and are the inverses of the detected pilot interval phases at the start and end of an EPOCH, respectively. However, the unassisted difference from beginning to end, i.e.,

$$diff_{lin} = \phi_{end} - \phi_{start}, \qquad (8)$$

is assumed, in the absence of additional information, to be off by an integer number, $m$, of rotations of $2\pi$. In accordance with the principles of the invention, the information from the decision-directed carrier recovery is used to select a value for the number $m$ such that the difference interpolated over is within plus or minus $\pi$ radians of the corrected decision-directed carrier recovery estimate. In particular, the following equations are defined:

$$diff_{lin,assist} = \phi_{end} - \phi_{start} + 2m\pi, \qquad (9)$$

$$diff_{cr} - \pi < diff_{lin,assist} < diff_{cr} + \pi, \text{ and} \qquad (10)$$

$$diff_{cr} - \pi < \phi_{end} - \phi_{start} + 2m\pi < diff_{cr} + \pi, \qquad (11)$$

where $diff_{lin,assist}$ is the difference to be used in the linear interpolator (instead of equation (4)), as assisted by decision-directed carrier recovery; and $diff_{cr}$ is the phase difference from beginning to end of an EPOCH as calculated by the decision-directed carrier recovery, corrected for $2\pi$ wraps.

From equation (11), the value for $m$ can be found by noting the following:

$$2m\pi < diff_{cr} + \pi - (\phi_{end} - \phi_{start}), \text{ or} \qquad (12)$$

$$m < diff_{cr}/(2\pi) + 0.5 - (\phi_{end} - \phi_{start})/(2\pi), \text{or} \qquad (13)$$

$$m = floor\,[\,diff_{cr}/(2\pi) + 0.5 - (\phi_{end} - \phi_{start})/(2\pi)], \qquad (14)$$

where floor(x) is the largest integer that is less than or equal to x. It should be noted that this floor calculation is easy to perform in the digital domain, as it involves a truncation of bits.

Once $m$ is determined thusly, this value of $m$ is used to determine the value for $diff_{lin,assist}$ from equation (9), above. In accordance with the principles of the invention, interpolator/controller 210 provides phase estimates with carrier assist in accordance with the following equation:

$$\phi_{derot,k} = \phi_{start} + \frac{k}{N} diff_{lin,assist,} \cdot \qquad (15)$$

As noted earlier, in a system lacking pilot symbols, i.e., where signal 104 does not include pilot intervals, a phase estimate may also be determined at particular times, e.g., periodically, by using a data-driven average, such as represented by the Viterbi and Viterbi algorithm (A.J. Viterbi and A.M. Viterbi, "Nonlinear estimation of PSK-modulated carrier phase with application to burst digital transmission," IEEE Transactions on Information Theory, vol. IT-29, pp. 543-551, July, 1983). Absent the inventive concept, equation (6) is used for linear interpolation, where $diff_{lin}$ is determined by:

$$diff_{lin} = \begin{cases} \phi_{end} - \phi_{start}, & when - \pi/4 < \phi_{end} - \phi_{start} < \pi/4; \\ \phi_{end} - \phi_{start} + \pi/2, & when \; \phi_{end} - \phi_{start} < -\pi/4; \\ \phi_{end} - \phi_{start} - \pi/2, & when \; \phi_{end} - \phi_{start} > \pi/4. \end{cases} \qquad (16)$$

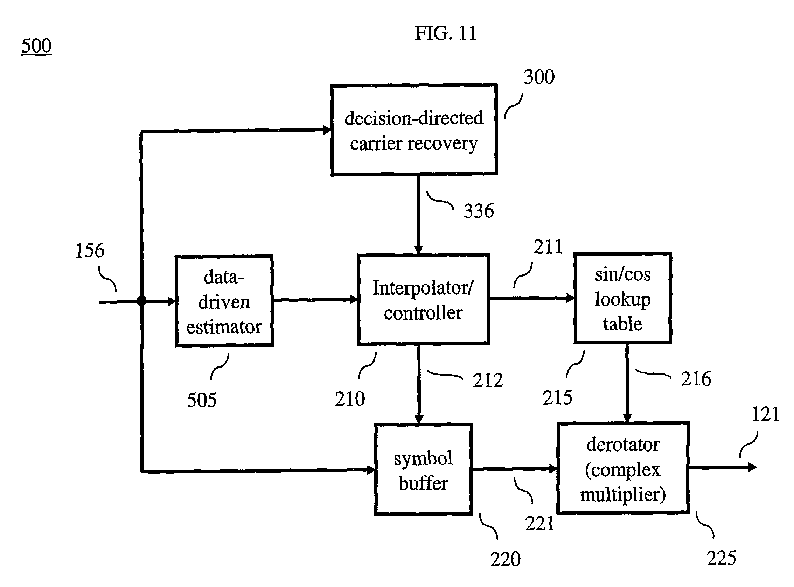

However, this is just another form of interpolating the phase between determined phase estimates - as such the inventive concept is also applicable and this variation is shown in FIG. 11. The latter is similar to FIG. 5 except that data driven estimator 505 provides at predefined times determined phase estimates to therein define an EPOCH (i.e., $\theta_{start}$ and $\theta_{end}$). For example, in a quadrature phase-shift keying (QPSK) system, an estimate is made over M symbols of an average phase by adding modified symbols $z_{mod}$ as

$$\phi_{est} = 0.25 \tan^{-1}\left(\sum_{m=1}^{M} z_{mod,m}\right) where$$

$$z_{mod,m} = |z_m|^p \exp(4j\angle z_m), \qquad (17)$$

and where the power $p$ is, e.g., equal to 2. It should be noted that, here, the estimate, due to the factor 0.25, is ambiguous beyond plus or minus $\pi/4$, rather than plus or minus $\pi$. Nonetheless, FIG. 11 shows a similar approach to that of FIG. 5 where phase information from decision-directed carrier recovery is used to assist a Viterbi and Viterbi based linear phase interpolation system.

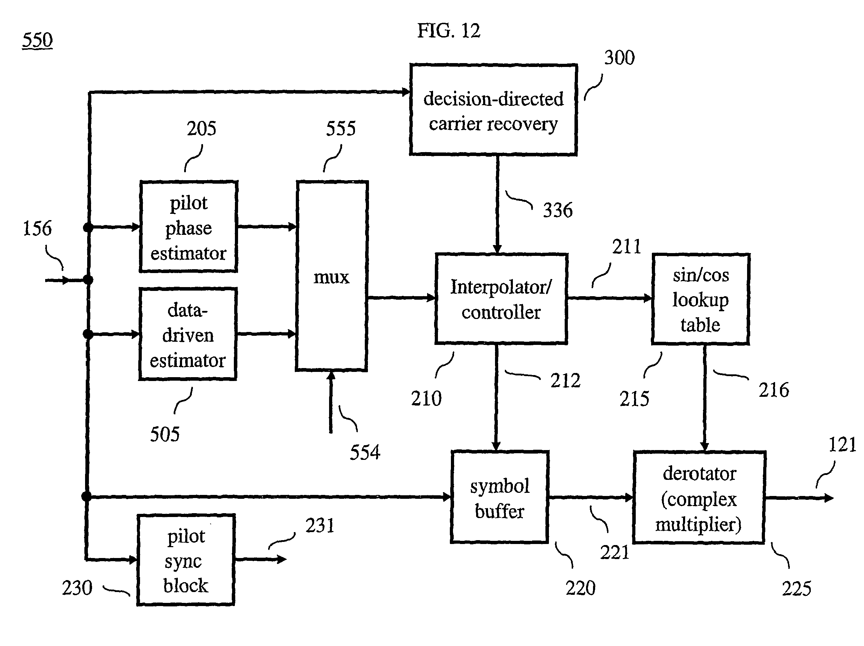

Turning now to FIG. 12, another embodiment in accordance with the principles of the invention is shown. FIG. 12 is a carrier-recovery arrangement 550 that combines the embodiments of FIGs. 5 and 11. In particular, multiplexer (mux) 555 is added to selecting from one of a number of sources of determined phase estimates as particular times. In this example, two sources are shown, a pilot phase estimator 205 source and a data driven estimator 505 source, but the invention is not so limited. Selection of a particular source is performed by signal 554. The latter can either be under software control (e.g., a mode setting, system parameter, etc.) or done via hardware (e.g., a switch). Once a particular source is selected, the operation of the embodiment of FIG. 12 is similar to that described above for FIGS. 5 and 11.

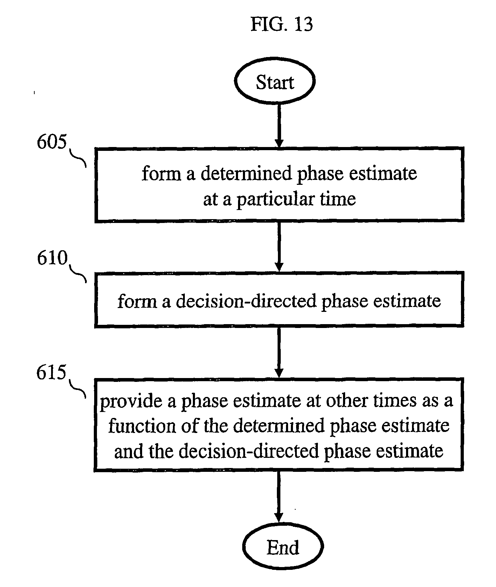

Attention should now be directed to FIG. 13, which shows an illustrative flow chart in accordance with the principles of the invention for use in receiver 105 of FIG. 1. In step 605, receiver 105 forms a determined phase estimate at a particular time (e.g., using the above-described pilot symbols or a data-driven process). In step 610, receiver 105 forms a decision-directed phase estimate (e.g., using the above-described Costas loop). In step 615, receiver 105 provides an estimate of a phase value at other times as a function of the determined estimate and the decision-directed phase estimate (e.g., using linear interpolation as modified by equation (15)).

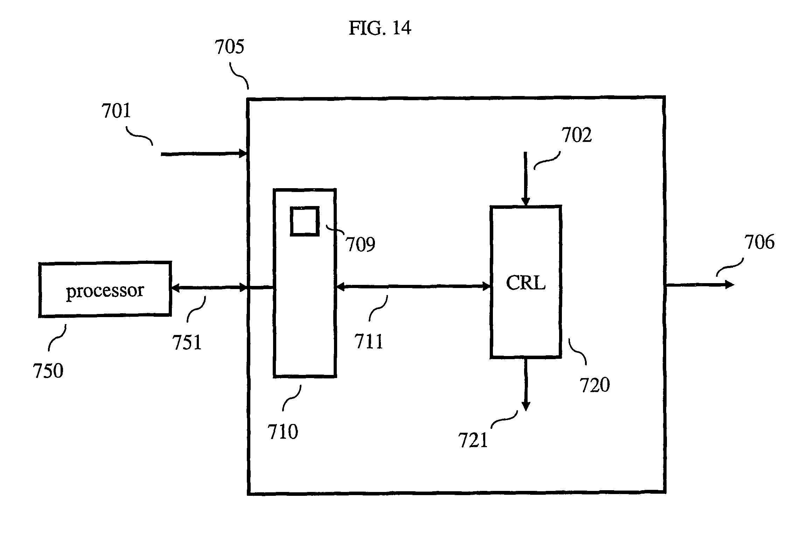

Another illustrative embodiment of the inventive concept is shown in FIG. 14. In this illustrative embodiment an integrated circuit (IC) 705 for use in a receiver (not shown) includes a carrier recovery loop (CRL) 720 and at least one register 710, which is coupled to bus 751. Illustratively, IC 705 is an integrated analog/digital television demodulator/decoder. However, only those portions of IC 705 relevant to the inventive concept are shown. For example, analog-digital converters, filters, decoders, etc., are not shown for simplicity. Bus 751 provides communication to, and from, other components of the receiver as represented by processor 750. Register 710 is representative of one, or more, registers, of IC 705, where each register comprises one, or more, bits as represented by bit 709. The registers, or portions thereof, of IC 705 may be read-only, write-only or read/write. In accordance with the principles of the invention, CRL 720 includes the above-described carrier recovery with assist feature, or operating mode, and at least one bit, e.g., bit 709 of register 710, is a programmable bit that can be set by, e.g., processor 750, for enabling or disabling this operating mode (e.g., to turn-on or turn-off carrier assist). In the context of FIG. 3, IC 705 receives an IF signal 701 (e.g., signal 116 of FIG. 3) for processing via an input pin, or lead, of IC 705. A derivative of this signal, 702, is applied to CRL 720 for carrier recovery as described above. CRL 720 provides signal 721, which is a derotated version of signal 702. CRL 720 is coupled to register 710 via internal bus 711, which is representative of other signal paths and/or components of IC 705 for interfacing CRL 720 to register 710 as known in the art. IC 705 provides one, or more, recovered signals, e.g., a composite video signal, as represented by signal 706. It should be noted that the above-described embodiment of FIG. 12 may also be implemented in IC 705 with, e.g., the selection of the source of the determined phase estimate being controlled by one or more bits of representative register 710.

As described above, and in accordance with the principles of the invention, in a carrier recovery system in which a form of interpolation is used to estimate phase values, additional precision is provided by the use of a decision-directed carrier recovery system to assist in the interpolation process, thus avoiding ambiguities.

In view of the above, it should be noted that although described in the context of a satellite communications system, the inventive concept is not so limited. For example, the elements of FIG. 1 may represent other types of systems and other forms of multi-media endpoints. For example, satellite radio, terrestrial broadcast, cable TV, etc. Also, although described herein in the context of a single demodulator, it should be realized that the inventive concept is applicable to multi-modulation receivers, where information may be conveyed on different signal layers. For example, layered modulation receivers, hierarchical modulation receivers, or combinations thereof. Indeed, the invention is applicable to any type of receiver in which carrier recovery is performed. Finally, it should be noted that the embodiments described above may operate at the symbol rate or some other rate, for example, samples at twice the symbol rate. This is so other processing, e.g., a fractionally-spaced equalizer, may be also be used in the receiver.

As such, the foregoing merely illustrates the principles of the invention and it will thus be appreciated that those skilled in the art will be able to devise numerous alternative arrangements which, although not explicitly described herein, embody the principles of the invention and are within its scope. For example, although illustrated in the context of separate functional elements, these functional elements may be embodied on one or more integrated circuits (ICs). Similarly, although shown as separate elements, any or all of the elements may be implemented in a stored-program-controlled processor, e.g., a digital signal processor (DSP) or microprocessor that executes associated software, e.g., corresponding to one or more of the elements shown in FIG. 5, etc. Further, although shown as separate elements, the elements therein may be distributed in different units in any combination thereof. For example, receiver 105 may be a part of TV 10 or receiver 105 may be located further upstream in a distribution system, e.g., at a head-end, which then retransmits the content to other nodes and/or receivers of a network. It is therefore to be understood that numerous modifications may be made to the illustrative embodiments and that other arrangements may be devised without departing from the scope of the present invention as defined by the appended claims.

### Claims

1. A method for use in a receiver for providing a phase estimate for use in carrier recovery, the method comprising:

   receiving a signal (106); and
   determining a phase estimate of the received signal at predetermined times;
   wherein the signal includes pilot symbols (104) and the determining step includes the steps of
   detecting the pilot symbols in the received signal at the predetermined times (205); and
   determining the phase estimate of the received signal at the predetermined times from the detected pilot symbols (205);
   and **characterized by**
   estimating a phase estimate of the received signal at other times by interpolating between determined phase estimates as a function of decision-directed phase estimates (210, 300).

2. The method of claim 1, **characterized in that** the decision-directed phase estimates represent a total phase excursion between the determined phase estimates.

3. The method of claim 1, **characterized in that** the determining step includes the step of:

   performing a data-driven average process on the received signal at the predetermined times to determine the phase estimate.

4. The method of claim 3, **characterized in that** the data-driven average process is the Viterbi and Viterbi algorithm.

**5.** Apparatus for use in a receiver, comprising:

a demodulator (120) for demodulating a received signal to provide a demodulated received signal wherein the received signal includes pilot symbols (104); and
a decoder (125) for processing the demodulated received signal to recover data conveyed therein;
the demodulator being adapted to detect the pilot symbols in the received signal at predetermined times, to determine a phase estimate of the received signal at the predetermined times from the detected pilot symbols (205), and **characterized by** the demodulator being fourther adapted to estimate a phase estimate of the received signal at other times by interpolating between determined phase estimates as a function of decision-directed phase estimates (210, 300).

**6.** The apparatus of claim 5, **characterized in that** the demodulator is further adapted to perform both interpolating carrier recovery and decision-directed carrier recovery such that interpolating carrier recovery is performed over a time interval and **characterized in that** a maximum phase excursion to be interpolated over is determined by accumulating phase information from the decision-directed phase estimates over the time interval.

**Patentansprüche**

**1.** Verfahren zur Verwendung in einem Empfänger zum Bereitstellen einer Phasenschätzung zur Verwendung bei der Trägerwiedergewinnung, mit den folgenden Schritten:

Empfangen eines Signals (106); und
Bestimmen einer Phasenschätzung des empfangenen Signals zu vorbestimmten Zeitpunkten;
wobei das Signal Pilotsymbole (104) enthält und der Schritt des Bestimmens die folgenden Schritte umfaßt:

Detektieren der Pilotsymbole in dem empfangenen Signal zu den vorbestimmten Zeitpunkten (205); und
Bestimmen der Phasenschätzung des empfangenen Signals zu den vorbestimmten Zeitpunkten aus den detektierten Pilotsymbolen (205);

**gekennzeichnet durch**
Schätzen einer Phasenschätzung des empfangenen Signals zu anderen Zeitpunkten **durch** Interpolieren zwischen bestimmten Phasenschätzungen als Funktion von entscheidungsgerichteten Phasenschätzungen (210, 300).

**2.** Verfahren nach Anspruch 1, **dadurch gekennzeichnet, daß** die entscheidungsgerichteten Phasenschätzungen eine cesamtphasenauslenkung zwischen den bestimmten Phasenschätzungen darstellen.

**3.** Verfahren nach Anspruch 1, **dadurch gekennzeichnet, daß** der Schritt des Bestimmens den folgenden Schritt umfaßt:

Ausführen eines datengesteuerten Mittelungsprozesses an dem empfangenen Signal zu den vorbestimmten Zeitpunkten, um die Phasenschätzung zu bestimmen.

**4.** Verfahren nach Anspruch 3, **dadurch gekennzeichnet, daß** der datengesteuerte Mittelungsprozess der Algorithmus von Viterbi und Viterbi ist.

**5.** Vorrichtung zur Verwendung in einem Empfänger, umfassend:

einen Demodulator (120) zum Demodulieren eines empfangenen Signals, um ein demoduliertes empfangenes Signal bereitzustellen, wobei das empfangene Signal Pilotsymbole (104) enthält; und
einen Decoder (125) zum Verarbeiten des demodulierten empfangenen Signals, um darin übermittelte Daten wiederzugewinnen;
wobei der Demodulator dafür ausgelegt ist, die Pilotsymbole in dem empfangenen Signal zu vorbestimmten Zeitpunkten zu detektieren, aus den detektierten Pilotsymbolen (205) eine Phasenschätzung des empfangenen Signals zu den vorbestimmten Zeitpunkten zu bestimmen und **dadurch gekennzeichnet, daß** der Demodulator ferner dafür ausgelegt ist, eine Phasenschätzung des empfangenen Signals zu anderen Zeitpunkten durch Interpolieren zwischen bestimmten Phasenschätzungen als Funktion von entscheidungsgerichteten Phasenschätzungen zu schätzen (210, 300).

**6.** Vorrichtung nach Anspruch 5, **dadurch gekennzeichnet, daß** der Demodulator ferner dafür ausgelegt ist, sowohl interpolierende Trägerwiedergewinnung als auch entscheidungsgerichtete Trägerwiedergewinnung dergestalt durchzuführen, daß über ein Zeitintervall interpolierende Trägerwiedergewinnung durchgeführt wird, und **dadurch gekennzeichnet, daß** eine maximale Phasenauslenkung, über die zu interpolieren ist, durch Akkumulieren von Phaseninformationen aus den entscheidungsgerichteten Phasenschätzungen über das Zeitintervall bestimmt wird.

**Revendications**

**1.** Procédé destiné à une utilisation dans un récepteur afin de fournir une estimation de phase permettant une utilisation dans la récupération d'une porteuse, le procédé comprenant :

la réception d'un signal (106), et
la détermination d'une estimation de phase du signal reçu à des instants prédéterminés,
dans lequel le signal inclut des symboles pilotes (104) et dans lequel l'étape de détermination inclut les étapes consistant à :

détecter les symboles pilotes dans le signal reçu aux instants prédéterminés (205), et
déterminer l'estimation de phase du signal reçu aux instants prédéterminés à partir des symboles pilotes détectés (205),

et **caractérisé par**
l'évaluation d'une estimation de phase du signal reçu à d'autres instants en réalisant une interpolation entre les estimations de phase déterminées en fonction d'estimations de phase orientées par une décision (210, 300).

**2.** Procédé selon la revendication 1, **caractérisé en ce que** les estimations de phase orientées par une décision représentent une excursion totale de la phase entre les estimations de phase déterminées.

**3.** Procédé selon la revendication 1, **caractérisé en ce que** l'étape de détermination inclut l'étape consistant à :

effectuer un traitement par calcul de moyenne conduit par les données sur le signal reçu aux instants prédéterminés afin de déterminer l'estimation de phase.

**4.** Procédé selon la revendication 3, **caractérisé en ce que** le traitement de calcul de moyenne conduit par les données est le traitement et l'algorithme de Viterbi.

**5.** Appareil destiné à une utilisation dans un récepteur, comprenant :

un démodulateur (120) permettant de démoduler un signal reçu afin de fournir un signal reçu démodulé, dans lequel le signal reçu inclut des symboles pilotes (104), et
un décodeur (125) destiné au traitement du signal reçu démodulé afin de récupérer les données transportées dans celui-ci,
le démodulateur étant conçu pour détecter les symboles pilotes dans le signal reçu à des instants prédéterminés, afin de déterminer une estimation de phase du signal reçu aux instants prédéterminés à partir des symboles pilotes détectés (205), et
**caractérisé en ce que** le démodulateur est en outre conçu pour évaluer une estimation de phase du signal reçu à d'autres instants en réalisant une interpolation entre les estimations de phase déterminées en fonction d'estimations de phase orientées par une décision (210, 300).

**6.** Appareil selon la revendication 5, **caractérisé en ce que** le démodulateur est en outre conçu pour effectuer à la fois une récupération de porteuse par interpolation et une récupération de porteuse orientée par une décision de telle sorte que la récupération de porteuse par interpolation soit effectuée sur un intervalle de temps, et **caractérisé en ce qu'**une excursion de phase maximale devant subir une interpolation est déterminée en accumulant des informations sur la phase à partir des estimations de phase orientées par une décision sur l'intervalle de temps.

FIG. 1

EP 1 813 070 B1

105

10

receiver

104 106

EP 1 813 070 B1

FIG. 2

*prior art*

<u>104</u>

frame
20

25
reference
symbol

26
pilot
portion

27
data
portion

FIG. 3

<u>105</u>

FIG. 4

FIG. 5

200

EP 1 813 070 B1

FIG. 6

EPOCH

54

$\theta_{start}$

$\theta_{end}$

time

51

EP 1 813 070 B1

FIG. 7

FIG. 8

π/- π radial

π radians

- π radians

FIG. 9

300

156

310

311

340

sin/cos
lookup
table

341

315

320 slicer

321

325 phase error
estimator

326

330 loop
filter

331

335 phase
integrator

336

FIG. 10

FIG. 11

500

156

decision-directed carrier recovery 300

336

data-driven estimator 505

Interpolator/ controller 212

210

sin/cos lookup table 211

215

216

symbol buffer 220

221

derotator (complex multiplier) 225

121

FIG. 12

EP 1 813 070 B1

FIG. 13

Start

605 → form a determined phase estimate
at a particular time

610 → form a decision-directed phase estimate

615 → provide a phase estimate at other times as a
function of the determined phase estimate
and the decision-directed phase estimate

End

EP 1 813 070 B1

FIG. 14

EP 1 813 070 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **IRVINE et al.** Symbol-aided plus decision-directed reception for PSK/TCM modulation on shadowed mobile satellite fading channels. *IEEE journal on selected areas in communications,* October 1992, vol. 10 (8
- **AJ. VITERBI ; A.M. VITERBI.** Nonlinear estimation of PSK-modulated carrier phase with application to burst digital transmission. *IEEE Transactions on Information Theory,* July 1983, vol. IT-29, 543-551

- **A.J. VITERBI ; A.M. VITERBI.** Nonlinear estimation of PSK-modulated carrier phase with application to burst digital transmission. *IEEE Transactions on Information Theory,* July 1983, vol. IT-29, 543-551